# EUROPEAN PATENT APPLICATION

(11) **EP 4 625 623 A1**
(43) Date of publication of application: **01.10.2025**
(21) Application number: 24875726.2
(22) Date of filing: 26.09.2024
(51) Int. Cl.: H01M 10/6551, H01M 10/613, H01M 50/211, H01M 50/502, H01M 50/59

(54) **BATTERY MODULE HAVING IMPROVED COOLING PERFORMANCE AND BATTERY PACK COMPRISING SAME**

(30) Priority: 06.11.2023 KR 20230151492
(71) Applicant: LG Energy Solution Ltd., 07335 Seoul (KR)
(72) Inventor: HAN, Seungwon, Daejeon 34122 (KR); KONG, Seungjin, Daejeon 34122 (KR); SIN, Jehwan, Daejeon 34122 (KR); LEE, Borahm, Daejeon 34122 (KR)
(74) Representative: BCKIP Part mbB
(86) International application number: PCT/KR2024/014668
(87) International publication number: WO 2025/100734

(57) **Abstract**

According to an embodiment of the present disclosure, a battery module includes: a battery cell stack in which multiple battery cells are stacked; a module case configured to accommodate the battery cell stack; and a first thermal resin layer on a top side of the battery cell stack inside the module case.

## Description

### Technical Field

The present disclosure relates to a battery module and a battery pack including the same and, more particularly, to a battery module with enhanced cooling performance and a battery pack including the same.

### Background

Secondary batteries, unlike primary batteries that cannot be recharged, refer to rechargeable batteries, and are applied not only to portable devices but also to electric vehicles (EVs) and hybrid electric vehicles (HEVs) driven by an electric power source.

The types of secondary batteries that are currently widely used include lithium-ion batteries, lithium polymer batteries, nickel-cadmium batteries, nickel-metal hydride batteries, nickel-zinc batteries, and so on. The operating voltage of such unit secondary battery cells, i.e., unit battery cells, is about 2.5V to 4.6V. Therefore, when a higher output voltage is required, a battery pack may be formed by connecting multiple battery cells in series. In addition, a battery pack may be formed by connecting multiple battery cells in parallel depending on a charge/discharge capacity required for the battery pack. Accordingly, the number of battery cells included in the battery pack may be set in various ways depending on the required output voltage or the charge/discharge capacity.

When configuring a battery pack by connecting multiple battery cells in series or in parallel, it is common to first configure a battery module including at least one battery cell, preferably multiple battery cells, and then configure a battery pack by using at least one of such battery modules and adding other components. Here, a battery module refers to a component in which multiple battery cells are connected in series or in parallel, and a battery pack refers to a component in which multiple battery modules are connected in series or in parallel to increase capacity and output.

The battery modules that constitute such a battery pack generate heat during charging or discharging, and therefore, cooling of the battery modules is necessary.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### Summary

The present disclosure provides a battery module with enhanced cooling performance and a battery pack including the same.

According to an embodiment of the present disclosure, a battery module includes: a battery cell stack in which multiple battery cells are stacked; a module case accommodating the battery cell stack; and a first thermal resin layer on a top side of the battery cell stack inside the module case.

The module case includes a bottom plate, and a top plate spaced upward from the bottom plate.

According to an embodiment of the disclosure, the battery module further includes two block pads on the bottom side of the top plate and spaced apart from each other.

The first thermal resin layer is between the two block pads.

The top plate includes one or more injection holes configured to inject thermal resin.

The block pads are compressible.

The block pads may be foam pads.

Opposite end portions of the block pads are respectively at opposite side edges of the top plate.

The battery module further includes a film between the top plate and the block pads.

An edge of the top plate includes one or more welded sections and one or more unwelded sections along a length direction thereof.

End portions of the block pads are in the unwelded sections of the top plate.

The unwelded sections are between the welded sections.

Each of opposite side edges of the top plate includes one or more welded sections and one or more unwelded sections along a length direction thereof, and the opposite end portions of the block pads are respectively in the unwelded sections of the top plate.

The module case includes a top plate assembly, and the top plate assembly includes a top plate on a top side of the battery cell stack, and two block pads on a bottom side of the top plate and spaced apart from each other.

The battery module further includes a second thermal resin layer on a bottom side of the battery cell stack inside the module case.

The module case includes a bottom plate, and a top plate spaced upward from the bottom plate, and the second thermal resin layer is on the bottom plate.

The battery module further includes a busbar frame on one side of the battery cell stack, and an insulating cover outside the busbar frame.

According to the present disclosure, a battery module with enhanced cooling performance and a battery pack including the same are provided.

### Brief Description of Drawings

FIG. 1 is a perspective view of a battery module according to an embodiment of the present disclosure;
FIG. 2 is an exploded perspective view of the battery module according to an embodiment of the present disclosure;
FIG. 3 is a perspective view of a battery cell in an embodiment of the present disclosure;
FIG. 4 is a perspective view of a terminal busbar in an embodiment of the present disclosure;
FIG. 5 is a perspective view illustrating an insulating cover and an end plate in an embodiment of the present disclosure;
FIG. 6 is a view illustrating a U-shaped frame and a battery cell stack in an embodiment of the present disclosure;
FIG. 7 is a view illustrating a state in which the top plate is removed from the battery module according to an embodiment of the present disclosure;
FIG. 8 is a bottom view of a top plate assembly in an embodiment of the present disclosure;
FIG. 9 is a detailed view of a portion of the top plate assembly illustrated in FIG. 8;
FIG. 10 is a view illustrating the injection of a thermal resin into the battery module according to an embodiment of the present disclosure;
FIG. 11 is a longitudinal cross-sectional view of the battery module according to an embodiment of the present disclosure;
FIG. 12 is a side view of the battery module according to an embodiment of the present disclosure;
FIG. 13 is a view illustrating a battery pack according to an embodiment of the present disclosure; and
FIG. 14 is a perspective view of a vehicle equipped with the battery pack according to an embodiment of the present disclosure.

### Detailed Description

Advantages and characteristics of the present disclosure and methods of achieving the same will become apparent by referring to embodiments described in detail below together with the accompanying drawings. However, the present disclosure is not limited to the embodiments to be described below but may be implemented in various different modes. These embodiments are provided merely to ensure that the present disclosure is fully disclosed and to fully inform a person ordinarily skilled in the art of the scope of the present disclosure. The present disclosure is defined by the claims only. Accordingly, in some embodiments, well-known process steps, well-known device structures, and well-known techniques are not described in detail to avoid obscuring the present disclosure. Like reference numerals indicate like components throughout the specification.

In the drawings, the thicknesses of layers and regions may be exaggerated for clarity. Throughout the specification, like reference numerals are used to refer to similar elements. When a part such as a layer, a film, a region, or a plate is described as being "above" another part, this includes not only cases where the part is directly above the other part but also cases where there is still another part therebetween. Conversely, when a part is described as being "directly above" another part, this means there is no other part therebetween. Similarly, when a part such as a layer, a film, a region, or a plate is described as being "under" another part, this includes not only cases where the part is "directly under" the other part, but also cases where there is still another part therebetween. Conversely, when a part is described as being "directly under" another part, this means there is no other part therebetween.

A battery module 1000 according to an embodiment of the present disclosure will be described in detail with reference to the drawings.

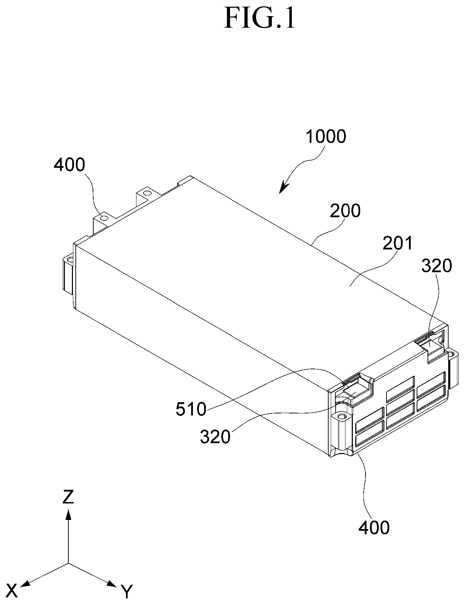

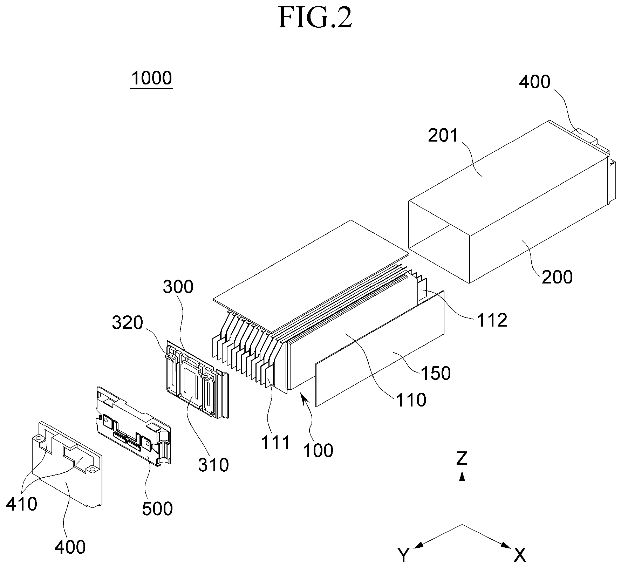

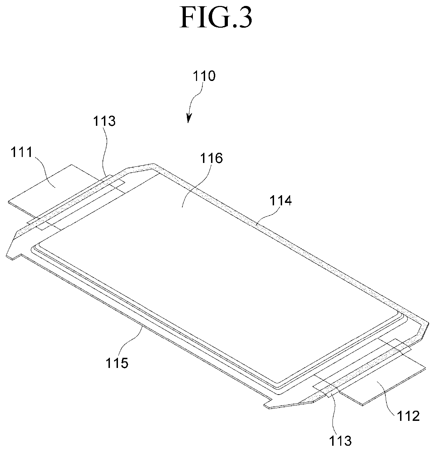

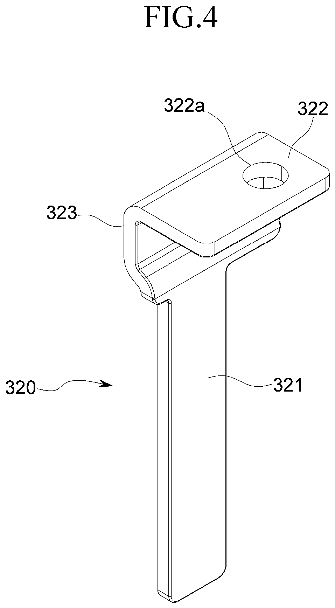

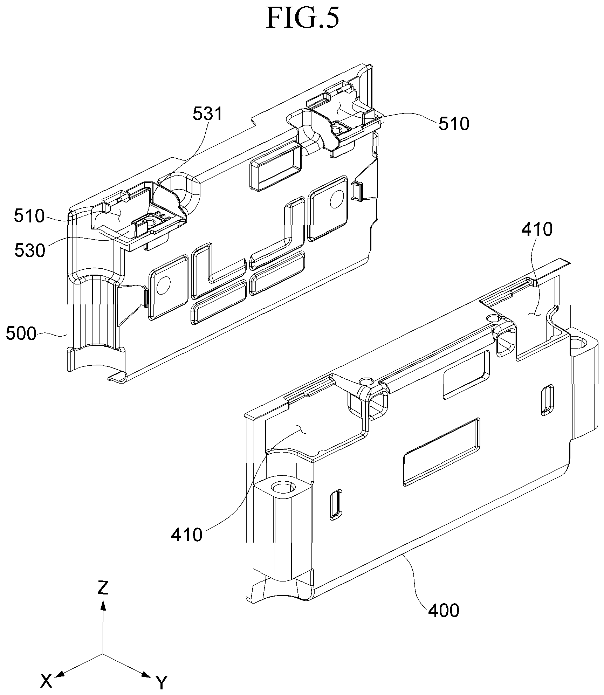

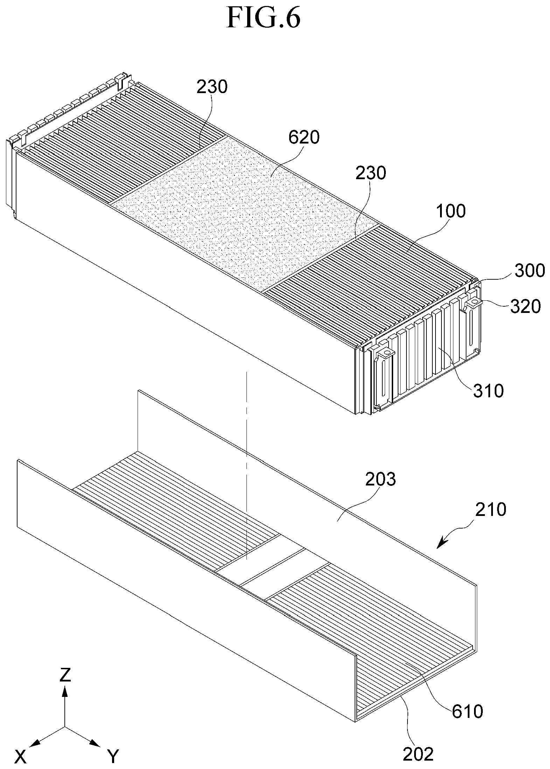

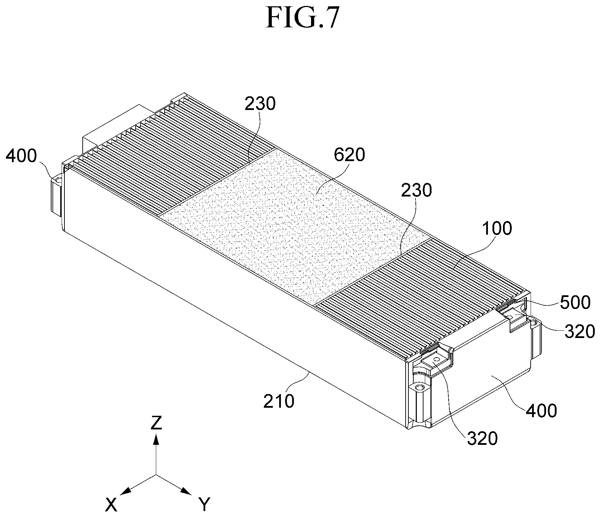

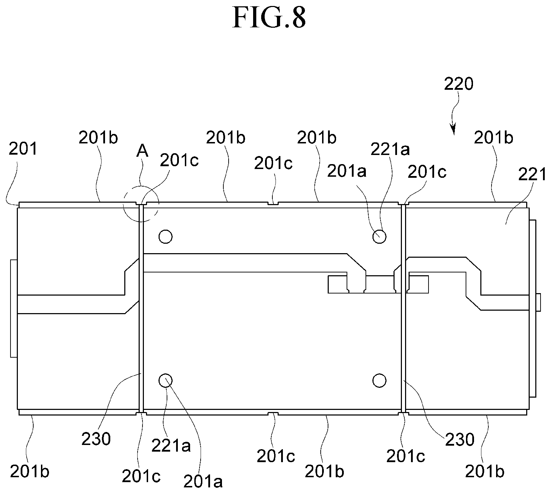

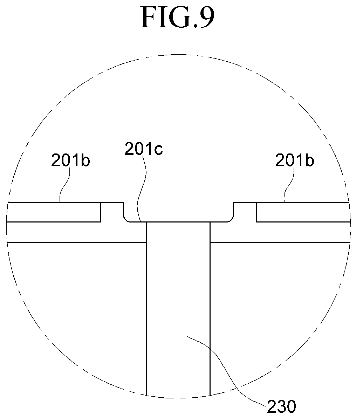

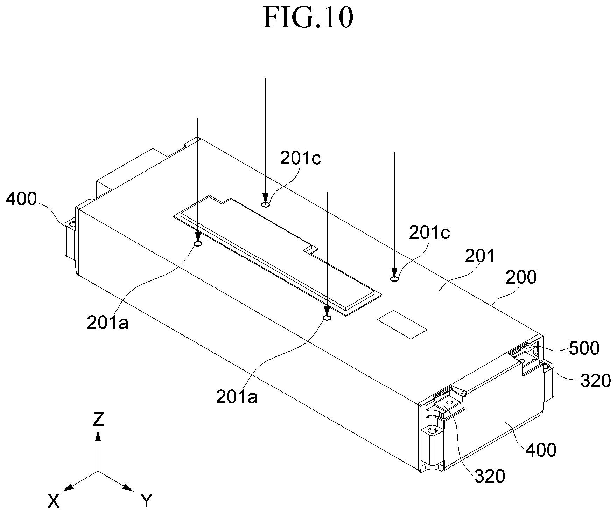

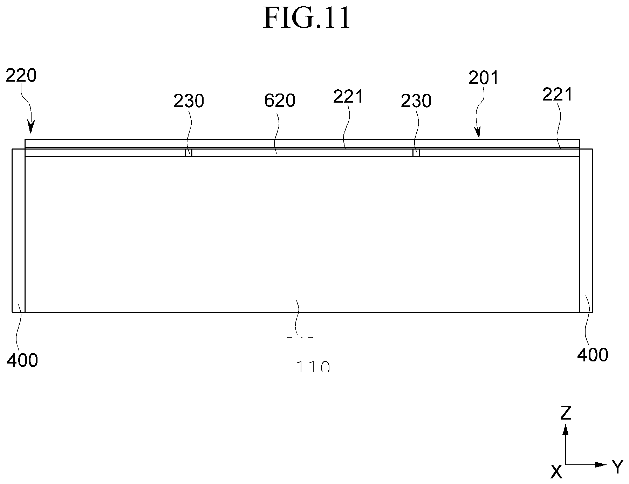

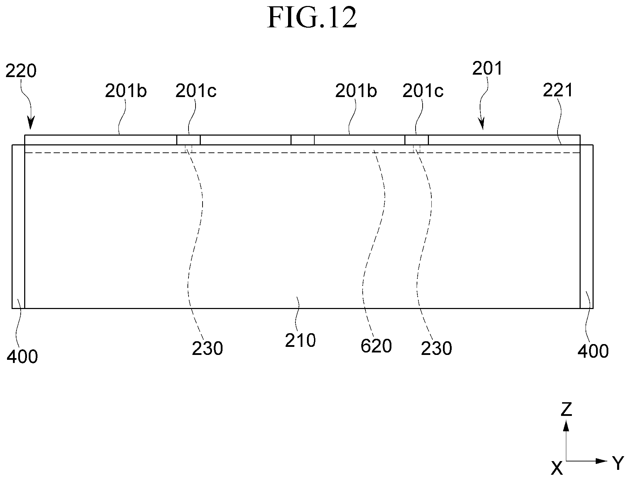

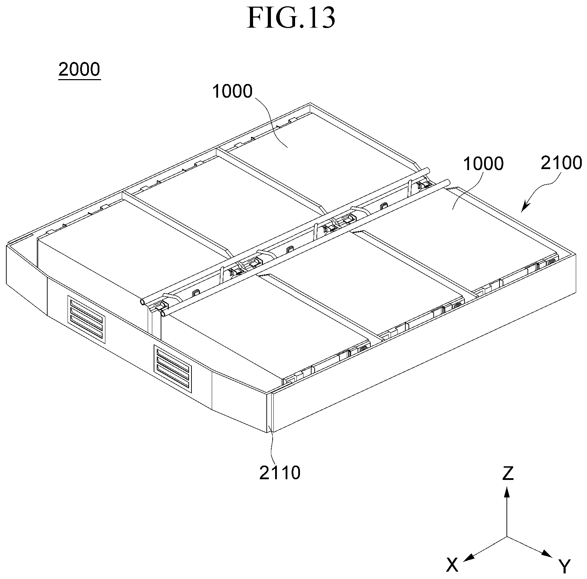

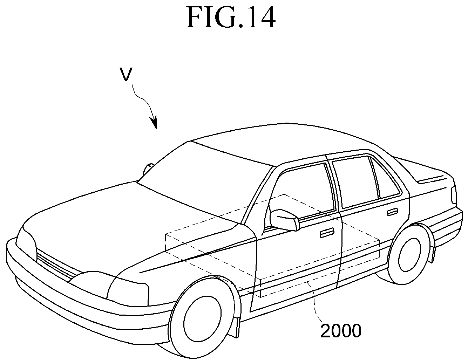

FIG. 1 is a perspective view of a battery module according to the present disclosure. FIG. 2 is an exploded perspective view of the battery module according to the present disclosure. FIG. 3 is a perspective view of a battery cell in the present disclosure. FIG. 4 is a perspective view of a terminal busbar in the present disclosure. FIG. 5 is a perspective view illustrating an insulating cover and an end plate in the present disclosure. FIG. 6 is a view illustrating a U-shaped frame and a battery cell stack in an embodiment of the present disclosure. FIG. 7 is a view illustrating a state in which the top plate is removed from the battery module according to an embodiment of the present disclosure. FIG. 8 is a bottom view of a top plate assembly in an embodiment of the present disclosure. FIG. 9 is a detailed view of a portion of the top plate assembly illustrated in FIG. 8. FIG. 10 is a view illustrating the injection of a thermal resin into the battery module according to an embodiment of the present disclosure. FIG. 11 is a longitudinal cross-sectional view of the battery module according to an embodiment of the present disclosure. FIG. 12 is a side view of the battery module according to an embodiment of the present disclosure. FIG. 13 is a view illustrating a battery pack according to an embodiment of the present disclosure. FIG. 14 is a perspective view of a vehicle equipped with the battery pack according to an embodiment of the present disclosure.

The battery module 1000 according to an embodiment of the present disclosure may include a battery cell stack 100 in which multiple battery cells 110 are stacked, a module case 200 configured to accommodate the battery cell stack 100, a busbar frame 300 positioned on one surface and/or the other surface of the battery cell stack 100, an insulating cover 500 disposed outside the busbar frame 300, and an end plate 400 disposed outside the insulating cover 500.

The battery cell stack 100 may be formed by stacking multiple battery cells 110 in one direction, and the multiple battery cells 110 may be electrically connected. The direction in which the multiple battery cells 110 are stacked may be the X-axis direction (or the -X-axis direction) in FIG. 2.

The direction from the front surface to the rear surface of the battery cell stack 100, or vice versa, may be defined as the length direction of the battery cell stack 100, which may correspond to the Y-axis direction in the drawing. In addition, the direction from the top surface to the bottom surface of the battery cell stack 100, or vice versa, may be defined as the width direction of the battery cell stack 100, which may correspond to the Z-axis direction in the drawing.

The length direction of the battery cell stack 100 may be substantially the same as the length direction of the battery cells 110. Electrode leads 111 and 112 of the battery cells 110 may be positioned on the front and rear surfaces of the battery cell stack 100, and busbars 310 and 320 of the battery module 1000 may be disposed near the front and rear surfaces of the battery cell stack 100 to facilitate electrical connection with the electrode leads 111 and 112.

The battery cells 110 may be provided as pouch-type battery cells, and the number of pouch-type battery cells that can be stacked per unit area may be maximized. However, the battery cells 110 are not necessarily provided as the pouch-type and may also be provided in prismatic, cylindrical, or various other types.

Each battery cell 110 provided in the pouch-type may include an electrode assembly and a cell case 115 that accommodates the electrode assembly (see FIG. 3).

The cell case 115 of the battery cell 110 is for accommodating the electrode assembly and may be a pouch-type cell case 115. The cell case 115 may include a lower case and an upper case that covers the lower case, and the upper and lower cases may be integrally formed. In addition, as illustrated in FIG. 3, the connection portions of the upper and lower cases may be bent and folded. As illustrated, the upper case may completely cover the lower case, and a sealing portion 114 may be formed around the periphery.

Both the upper and lower cases may have a laminate structure including an inner coating layer, a metal layer, and an outer coating layer. The inner coating layer is positioned on the inside of the cell case 115 relative to the metal layer and should have insulation properties and electrolyte resistance since it is in direct contact with the electrode assembly. In addition, for sealing, the sealing area where the inner layers are heat-bonded is required to have excellent thermal-sealing strength. The metal layer, positioned between the inner and outer coating layers, serves as a barrier layer that prevents moisture or various gases from penetrating into the cell from the outside. Preferably, a lightweight and highly formable aluminum (Al) thin film may be used as the material for the metal layer in contact with the inner coating layer. The outer coating layer is positioned on the outside of the cell case 115 relative to the metal layer. This outer coating layer may be made of a heat-resistant polymer with excellent tensile strength, moisture impermeability, and air impermeability to ensure heat resistance and chemical resistance while protecting the electrode assembly. Examples of such polymers include nylon or polyethylene terephthalate.

Recess 116 may be formed in the upper and lower cases, respectively, and the electrode assembly may be accommodated in the recesses 116 of the upper and lower cases.

The electrode assembly accommodated in the cell case 115 may be one selected from a group consisting of: a jelly-roll type electrode assembly in which a separator is interposed between long sheet-shaped positive and negative electrodes and then wound; a stacked type electrode assembly including unit cells in which rectangular positive and negative electrodes are stacked with a separator interposed therebetween; a stackfolding type electrode assembly in which unit cells are wound with a long separator film; or a lamination-stacked type electrode assembly in which unit cells are laminated with a separator interposed therebetween and attached to each other.

The electrode assembly may also include two electrode tabs and two electrode leads 111 and 112 respectively connected to the electrode tabs via welds.

One of the two electrode leads 111 and 112 may be a positive electrode lead connected to the positive electrode tab, and the remaining one of the electrode leads 111 and 112 may be a negative electrode lead connected to the negative electrode tab.

Lead films 113 may be attached the electrode leads 111 and 112, respectively. The lead films 113 attached to the electrode leads 111 and 112 may be positioned between the electrode leads 111 and 112 and the cell case 115 to prevent short circuits between the electrode leads 111 and 112 and the cell case 115 and to enhance sealing, thereby preventing electrolyte leakage or the like.

The two electrode leads 111 and 112 are illustrated as being disposed on opposite sides of the electrode assembly, respectively, but may also be disposed on only one side of the electrode assembly depending on the arrangement of the electrode tabs.

The module case 200 may protect the battery cell stack 100 and the associated electrical components from external physical impact, and the module case 200 may accommodate the battery cell stack 100 and the associated electrical components in the internal space of the module case 200.

The structure of the module case 200 may vary, and may be, for example, a mono-frame structure. Here, the mono-frame may be in the form of a metal sheet in which the top surface, the bottom surface, and opposite side surfaces are integrated. The mono-frame may be manufactured through extrusion molding. As another example, the structure of the module case 200 may be a structure in which a U-shaped frame 210 and a top plate 201 are coupled. In the case where the U-shaped frame 210 and the top plate 201 are coupled, the structure of the module case 200 may be formed by coupling the top plate 201 to the top side of the U-shaped frame 210, which is a metal sheet in which a bottom plate 202 and opposite side plates 203 are coupled or integrated (see FIG. 6), and each frame or plate may be manufactured through press molding. In addition, the structure of the module case 200 may be provided as a structure of an L-shaped frame, in addition to the mono-frame or the U-shaped frame 210, and may also be provided in various structures not described in the above examples.

The structure of the module case 200 may be provided in an open form along the length direction of the battery cell stack 100. The front and rear surfaces of the battery cell stack 100 may not be covered by the module case 200. The electrode leads 111 and 112 of the battery cells 110 may not be covered by the module case 200. The front and rear surfaces of the battery cell stack 100 may be covered by the busbar frames 300, end plates 400, or busbars 310 and 320, which will be described later, and through this, the front and rear surfaces of the battery cell stack 100 may be protected from external physical impacts.

A compression pad 150 may be positioned between the battery cell stack 100 and one side surface among the inner surfaces of the module case 200.

The compression pad 150 may be disposed to face the outermost battery cell 110 of the battery cell stack 100 in the X-axis direction in the battery cell stack 100.

In addition, a thermal resin may be injected into the space between the battery cell stack 100 and the inner surfaces of the module case 200, and thermal resin layers 610 and 620 may be formed between one surface of the battery cell stack 100 and one of the inner surfaces of the module case 200 by the injected thermal resin. At this time, the thermal resin layers 610 and 620 may be positioned on the Z-axis of the battery cell stack 100 and formed between the bottom plate 202 positioned on the - Z axis of the battery cell stack 100 and the module case 200. The thermal resin layers 610 and 620 will be described in more detail later.

The busbar frame 300 may be positioned on one surface of the battery cell stack 100 to cover the one surface of the battery cell stack 100 while guiding the connection between the battery cell stack 100 and an external device. Specifically, the busbar frame 300 may be positioned on the front or rear surface of the battery cell stack 100, as illustrated, and may also be positioned on the top surface, the bottom surface, or a side surface. At least one of the busbars 310 and 320 and a module connector may be mounted on the busbar frame 300. As illustrated in FIG. 2, one surface of the busbar frame 300 may be connected to one surface or the other surface of the battery cell stack 100, and the other surface of the busbar frame 300 may be connected to the busbars 310 and 320.

The busbar frame 300 may include electrically insulating material. The busbar frame 300 may limit contact between the busbars 310 and 320 and other portions of the battery cells 110 other than the portions connected to the electrode leads 111 and 112, and may prevent electrical short circuits from occurring.

The busbar frame 300 may be positioned on each of the opposite sides of the battery cell stack 100.

The busbars 310 and 320 may be mounted on one surface of the busbar frame 300 and may electrically connect the battery cell stack 100 or battery cells 110 to an external device circuit. Multiple busbars 310 and 320 may be disposed, and by being positioned between the battery cell stack 100 or the busbar frame 300 and the end plate 400, the multiple busbars may be protected from external impacts or the like and minimized in durability degradation due to external moisture or the like.

The busbars 310 and 320 may be electrically connected to the battery cell stack 100 via the electrode leads 111 and 112 of the battery cells 110.

Specifically, the electrode leads 111 and 112 of the battery cells 110 may pass through lead slits formed in the busbar frame 300, and may then be bent and connected to the busbars 310 and 320. The battery cells 110 constituting the battery cell stack 100 may be connected in series or parallel by the busbars 310 and 320.

The busbars 310 and 320 may include a terminal busbar 320 for electrically connecting one battery module 100 to another battery module 100. To be connected to another battery module 100, at least portion of the terminal busbar 320 may be exposed outside the end plate 400, and the end plate 400 may be provided with a terminal opening 410 for this purpose.

The terminal busbar 320 may have one end portion (a second portion 322) exposed through an opening 510 of the insulating cover 500 and the terminal opening 410 of the end plate 400.

As illustrated in FIG. 4, the terminal busbar 320 may include a first portion 321 connected to the electrode leads 111 and 112 of the battery cells 110 and a second portion 322 exposed outside through the terminal opening 410. The terminal busbar 320 may further include a bending portion 323 formed between the first portion 321 and the second portion 322.

In the terminal busbar 320, the first portion 321 may be connected to the second portion 322 via the bending portion 323, and one surface of the first portion 321 and one surface of the second portion 322 may be perpendicular to each other. That is, by forming the bent bending portion 323 in the terminal busbar 320, the second portion 322 may protrude and be seated on a seating portion 530 on the insulating cover 500, and the second portion 322 may be electrically connected to an inter-busbar (not illustrated). A coupling hole 322a is formed in the second portion 322, which constitutes one end portion of the terminal busbar 320, and the second portion 322 of the terminal busbar 320 is fixed by a fixing pin (not illustrated) inserted into the coupling hole 322a.

The end plate 400 may cover the open surface of the module case 200 to protect the battery cell stack 100 and the electrical components connected thereto from external physical impacts. For this purpose, the end plate 400 may be made of a material with a predetermined strength. For example, the end plate 400 may include a metal such as aluminum or a plastic material.

Terminal openings 410 may be formed in the end plate 400. The terminal openings 410 may be disposed on opposite sides of the end plate 400, and a portion of the insulating cover 500 and one end portion (the second portion 322) of the terminal busbar 320 may be exposed through the terminal openings 410.

In addition, a connector opening may be positioned between the terminal openings 410 on the opposite sides of the end plate 400, and a module connector may be exposed outside through the connector opening.

The end plate 400 may be coupled with the module case 200 while covering the busbar frame 300 or the busbars 310 and 320 positioned on one surface of the battery cell stack 100. Each edge of the end plate 400 may be coupled to the corresponding edges of the module case 200 by welding, bolting, hook fastening, or other methods.

The end plate 400 may be positioned on each of opposite surfaces of the module case 200 to cover opposite surfaces of the battery cell stack 100. In this embodiment, an example is illustrated where the end plate 400 is positioned on each of the front and rear surfaces of the module case 200.

In addition, an insulating cover 500 for electrical insulation may be positioned between the end plate 400 and the busbar frame 300. That is, the busbar frame 300, the insulating cover 500, and the end plate 400 may be sequentially positioned outward from the battery cell stack 100. Like the end plates 400, multiple busbar frames 300 and insulating covers 500 may be provided as multiple units.

The insulating cover 500 may include electrically insulating material and may block contact between the busbars 310 and 320 and the end plate 400.

The insulating cover 500 may include an opening 510 and a seating portion 530. The opening 510 may be positioned on each of opposite sides of the upper portion of the insulating cover 500, and one end portion (the second portion 322) of the terminal busbar 320 may be exposed through the opening 510.

In addition, a connector opening may be positioned between the openings 510 positioned on the opposite sides of the insulating cover 500, and a module connector may be exposed outside through the connector opening.

The insulating cover 500 may be positioned on the inner surface of the end plate 400 and may be, but not necessarily, in close contact with the inner surface of the end plate 400.

As described above, one end portion (the second portion 322) of the terminal busbar 320 may be exposed through the opening 510, and the exposed end portion (the second portion 322) of the terminal busbar 320 may be seated on the seating portion 530. Therefore, the seating portion 530 may be disposed adjacent to the opening 510 and may be disposed on the upper outer surface.

On the top surface of the seating portion 530, the second portion 322 of the terminal busbar 320 may be seated, and thus the top surface of the seating portion 530 may form the seating surface. In addition, as illustrated in FIG. 5, the seating portion 530 may include a fixing member 531 for fixing the terminal busbar 320.

The fixing member 531 may fix the second portion 322 of the terminal busbar 320 and may include a fixing hole.

A fixing pin (not illustrated) may be inserted into the fixing hole. The second portion 322 of the terminal busbar 320 may be fixed to the insulating cover 500 by fixedly coupling a fixing pin (not illustrated), which is inserted into the coupling hole 322a formed in the second portion 322 of the terminal busbar 320, to the fixing hole.

Therefore, the second portion 322 of the terminal busbar 320 is seated on the seating portion 530 of the insulating cover 500, and the second portion 322 is seated and comes into contact with the fixing member 531, which is disposed on the sating portion 530.

In addition, a terminal cover (not illustrated), which covers one end portion (the second portion 322) of the terminal busbar 320, may be disposed on the insulating cover 500.

Meanwhile, as illustrated in FIGS. 6 to 10, the battery module 1000 in this embodiment may include thermal resin layers 610 and 620.

As illustrated in FIG. 6, a second thermal resin layer 610 may be disposed on the bottom plate 202 of the module case 200 in this embodiment. Therefore, the second thermal resin layer 610 may be disposed on the bottom side of the battery cell stack 100 within the module case 200.

In this embodiment, the second thermal resin layer 610 may be formed by applying or injecting thermal resin onto the top surface of the bottom plate 202 (the top surface of the bottom plate 202 facing the inside of the module 1000) of the module case 200. The second thermal resin layer 610, which is disposed between the battery cell stack 100 and the bottom plate 202 of the module case 200, may serve to transfer the heat from the battery cell stack 100 to the bottom plate 202 of the module case 200, thereby cooling the battery cell stack 100.

FIG. 6 illustrates an example where the module case 200 is formed as a structure including a U-shaped frame 210, but may also be formed as a monoframe.

In FIG. 6, the second thermal resin layer 610 is disposed on the bottom plate 202 of the module case 200, but may also be disposed on the bottom plate 202 and the side walls 203 of the module case 200.

In this embodiment, the thermal resin may have adhesiveness and thermoplasticity, and various thermally conductive adhesives may be used as the thermal resin. For example, the battery module 1000 according to an embodiment of the present disclosure may employ various organic and/or inorganic thermally conductive adhesives, such as thermally conductive epoxy adhesives, thermally conductive silicone adhesives, and thermally conductive urethane adhesives.

As illustrated in FIGS. 6, 7, 11, and 12, the first thermal resin layer 620 may be disposed on the top side of the battery cell stack 100 in this embodiment.

The first thermal resin layer 620 may be formed by injecting or applying thermal resin onto the top surface or top side of the battery cell stack 100. The first thermal resin layer 620, which is disposed between the battery cell stack 100 and the top plate 201, may serve to transfer the heat from the battery cell stack 100 to the top plate 201 of the module case 200, thereby cooling the battery cell stack 100.

Specifically, in this embodiment, the thermal resin for forming the first thermal resin layer 620 may be injected through the top plate assembly 220, which is coupled to the top side of the U-shaped frame 210. Therefore, in this embodiment, the module case 200 may include the U-shaped frame 210 and the top plate assembly 220, as illustrated in FIG. 6.

As illustrated in FIGS. 8, 11, and 12, in this embodiment, the top plate assembly 220 may include a top plate 201, which is coupled to the top side of the U-shaped frame 210, a film 221 disposed on the top plate 201, and a block pad 230 disposed on the film 221.

The top plate 201 is coupled to the top side of the U-shaped frame 210 and may be coupled to the U-shaped frame 210 by welding. Specifically, the opposite side edges of the top plate 201 may be respectively coupled to the upper ends of the opposite side surfaces 203 of the U-shaped frame 210 by welding. As an example, the top plate 201 may be coupled to the U-shaped frame 210 by laser-welding.

Each of the opposite side edges of the top plate 201 may include, along its length, welded sections 201b where welding is performed, and non-welded sections 201c between the welded sections 201b where welding is not performed.

FIGS. 8, 11, and 12 illustrate an example where four welded sections 201b and three non-welded sections 201c are formed on the top plate 201, but the numbers of welded sections 201b and non-welded sections 201c may vary.

In addition, one or more injection holes 201a may be formed in the top plate 201. The injection holes 201a are used for injecting thermal resin, and thermal resin may be injected from the outside of the battery module 1000 through these injection holes 201a. FIG. 8 illustrates an example where four injection holes 201a are formed, but the number of injection holes 201a may vary.

In the top plate assembly 220, a film 221 may be attached to the top plate 201 and, in an example, may be a polycarbonate film. The film 221 may be disposed between the top plate 201 and the battery cell stack 100 to electrically insulate the top plate 201 from the battery cell stack 100.

As illustrated in FIG. 8, through-holes 221a may be formed in the film 221. The through-holes 221a may be disposed at positions corresponding to the injection holes 201a in the top plate 201 and may be in communication with the injection holes 201a. Thus, thermal resin may be injected from the outside to the top side of the battery cell stack 100 through the injection holes 201a and the through-holes 221a.

In the top plate assembly 220, block pads 230 may be attached onto the film 221 and may restrict the flow of thermal resin that is injected onto the battery cell stack 100.

In this embodiment, as illustrated in FIG. 8, two block pads 230, which are spaced apart from each other in the length direction of the top plate 201 (or the length direction of the battery module 100, i.e., the Y-axis direction), may be disposed parallel to each other on the film 221.

Therefore, the thermal resin injected through the injection holes 201a and the through-holes 221a is filled in the space between the two block pads 230 rather than flowing beyond the block pads 230 on the battery cell stack 100.

The respective end portions of the block pads 230 may extend to the edges of the top plate 201. Specifically, in FIG. 8, the upper end portions of the block pads 230 may extend to the upper edges of the top plate 201, and the lower end portions of the block pads 230 may extend to the lower edges of the top plate 201.

In addition, the end portions of the block pads 230 may be positioned in the non-welded sections 201c along the edges of the top plate 201. That is, in FIG. 8, the upper end portions of the block pads 230 may be positioned in the non-welded sections 201c at the upper edges of the top plate 201, and the lower end portions of the block pads 230 may be positioned in the non-welded sections 201c at the lower edges of the top plate 201.

As described above, at the edges of the top plate 201, the welded sections 201b and the non-welded sections 201c are disposed along the length direction. Since the end portions of the block pads 230 are disposed in the non-welded sections 201c, the block pads 230 may be prevented from being deformed or deteriorated during the welding process of the top plate 201, and the function of the block pads 230 may be prevented from being reduced.

The block pads 230 may be made of a compressible material. Inside the module case 200, the block pads 230 may come into contact with the top surface of the battery cell stack 100 and be compressed. As a result, the block pads 230 may be brought into close contact with the top surface of the battery cell stack 100, thereby firmly preventing the flow of the injected thermal resin.

The block pads 230 may be foam pads, and materials such as urethane foam, shock-absorbing memory foam, or rubber pads may be used for the block pads 230.

Meanwhile, it has been described that, in the top plate assembly 220, the film 221 is disposed on the top plate 201 and the block pads 230 are disposed on the film 221, but, within the battery module 1000, the film 221 may also be disposed on the bottom side of the top plate 201 and the block pads 230 may be disposed on the bottom side of the film 221.

In this way, the top plate assembly 220, in which the film 221 is attached to the top plate 201 and the block pads 230 are coupled to the film 221, may be assembled and then coupled to the U-shaped frame 210 to form the module case 200.

Meanwhile, FIG. 10 illustrates the injection of thermal resin through the top plate 201 of the battery module 1000 case 200 in this embodiment. As illustrated, in the battery module 1000 according to this embodiment, after the top plate 201 or the top plate assembly 220 is welded to the U-shaped frame 210, thermal resin may be injected through four injection holes 201a.

Once injected through the injection holes 201a, the thermal resin moves to the top surface of the battery cell stack 100 through the through holes 221a in the film 221 attached to the underside of the top plate 201. After reaching the top surface of the battery cell stack 100, the thermal resin moves toward two opposite block pads 230 in the length direction of the battery module 1000 (the Y-axis direction or the -Y-axis direction) and moves toward the opposite side surfaces 203 of the module case 200 in the width direction of the battery module 1000 (the X-axis direction or -X-axis direction).

Therefore, the thermal resin injected through the injection holes 201a in the top plate 201 fills the space defined by the top surface of the battery cell stack 100, the two opposite block pads 230, the side surfaces 203 of the module case 200, and the top plate 201, and forms the first thermal resin layer 620 on the top side of the battery cell stack 100.

As described above, in the battery module 1000 according to an embodiment of the present disclosure, the first thermal resin layer 620 is formed on the top side of the battery cell stack 100, and the second thermal resin layer 610 is formed on the bottom side of the battery cell stack 100.

In this embodiment, the first and second thermal resin layers 620 and 610 are formed on the top and bottom sides of the battery module 1000, thereby enabling heat to be transferred to the top and bottom sides of the battery cell stack 100 and improving cooling performance. In addition, during quick charging, a higher current is introduced, requiring enhanced cooling performance. As described above, in the battery module 1000 according to an embodiment of the present disclosure, the cooling performance is enhanced, thereby enabling the improvement of quick-charging capability.

One or more battery modules 1000 according to the present disclosure, as described above, may form a battery pack 2000. As illustrated in FIG. 13, the battery pack 2000 according to an embodiment of the present disclosure may accommodate at least one battery module 1000 inside a pack case 2100, and may include various control and protection systems such as a battery management system (BMS) and a cooling system.

The pack case 2100 may include a lower housing 2110 and an upper housing (not illustrated) coupled to the top of the lower housing 2110, and multiple battery modules 1000 may be accommodated within the internal spaces of the lower housing 2110 and the upper housing.

Meanwhile, the embodiment of the present disclosure illustrates an example where multiple battery modules 1000 are accommodated inside the battery pack 2000, but multiple battery cells 110 may also be directly disposed inside the battery pack 2000.

The battery module 1000 and the battery pack 2000 configured in this manner according to the present disclosure are applicable to various devices. Specifically, the battery module and the battery pack are applicable to transportation means, such as an electric bicycle, an electric vehicle V, and a hybrid vehicle, or an energy storage system (ESS). However, without being limited thereto, they are applicable to various devices capable of using secondary batteries.

FIG. 14 is a view illustrating an electric vehicle V equipped with the battery pack 2000. In the electric vehicle V, the wheels are driven by a motor powered by the battery pack 2000, enabling the electric vehicle to operate.

The present disclosure has been described with reference to embodiments as discussed above, but is not limited to these embodiments. Various modifications and changes can be made by those skilled in the art without departing from the spirit of the present disclosure.

The present disclosure is capable of providing a battery module with enhanced cooling performance and a battery pack including the same.

## Claims

1. A battery module comprising:
a battery cell stack in which multiple battery cells are stacked;
a module case accommodating the battery cell stack; and
a first thermal resin layer on a top side of the battery cell stack inside the module case.

2. The battery module of claim 1, wherein the module case comprises:
a bottom plate; and
a top plate spaced upward from the bottom plate.

3. The battery module of claim 2, further comprising:
two block pads on a bottom side of the top plate and spaced apart from each other.

4. The battery module of claim 3, wherein the first thermal resin layer is between the two block pads.

5. The battery module of claim 3, wherein the top plate comprises one or more injection holes configured to inject thermal resin.

6. The battery module of claim 3, wherein the block pads are compressible.

7. The battery module of claim 3, wherein the block pads are foam pads.

8. The battery module of claim 3, wherein opposite end portions of the block pads are respectively at opposite side edges of the top plate.

9. The battery module of claim 3, further comprising:
a film between the top plate and the block pads.

10. The battery module of claim 3, wherein an edge of the top plate comprises one or more welded sections and one or more unwelded sections along a length direction thereof.

11. The battery module of claim 10, wherein end portions of the block pads are in the unwelded sections of the top plate.

12. The battery module of claim 10, wherein the unwelded sections are between the welded sections.

13. The battery module of claim 3, wherein each of opposite side edges of the top plate comprises one or more welded sections and one or more unwelded sections along a length direction thereof, and
wherein the opposite end portions of the block pads are respectively in the unwelded sections of the top plate.

14. The battery module of claim 1, wherein the module case comprises a top plate assembly, and
wherein the top plate assembly comprises:
a top plate on a top side of the battery cell stack; and
two block pads on a bottom side of the top plate and spaced apart from each other.

15. The battery module of claim 1, further comprising:
a second thermal resin layer on a bottom side of the battery cell stack inside the module case.

16. The battery module of claim 15, wherein the module case comprises:
a bottom plate; and
a top plate spaced upward from the bottom plate, and
wherein the second thermal resin layer is on the bottom plate.

17. The battery module of claim 1, further comprising:
a busbar frame on one side of the battery cell stack; and
an insulating cover outside the busbar frame.
